(19) Europäisches Patentamt
European Patent Office
Office européen des brevets

(11) **EP 2 654 464 B1**

(12) **EUROPEAN PATENT SPECIFICATION**

(45) Date of publication and mention
of the grant of the patent:
**23.11.2016  Bulletin 2016/47**

(21) Application number: **11804577.2**

(22) Date of filing: **22.12.2011**

(51) Int Cl.:
*A23L 33/115* (2016.01)          *A23L 7/109* (2016.01)

(86) International application number:
**PCT/EP2011/073845**

(87) International publication number:
**WO 2012/085233 (28.06.2012 Gazette 2012/26)**

(54) **SHORT COOKING DRY PASTA, ITS USE AND PROCESS FOR THE PREPARATION**

TROCKENNUDELN MIT KURZER KOCHZEIT, DEREN VERWENDUNG UND VERFAHREN ZUR HERSTELLUNG

PÂTES DÉSHYDRATÉES À CUISSON RAPIDE, LEUR UTILISATION ET PROCÉDÉ POUR LEUR PRÉPARATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2010  EP 10196402**

(43) Date of publication of application:
**30.10.2013  Bulletin 2013/44**

(73) Proprietor: **Nestec S.A.**
**1800 Vevey (CH)**

(72) Inventor: **BATTAINI, Giuseppe**
**78467 Konstanz (DE)**

(74) Representative: **Mollet, Beat Max et al**
**Nestec S.A.**
**CT-IAM**
**Avenue Nestlé 55**
**1800 Vevey (CH)**

(56) References cited:
**CN-A- 1 541 555          CN-A- 101 057 640
FR-A- 1 437 015          JP-A- 63 049 051
US-A1- 2002 146 485     US-A1- 2010 247 731**

• **DATABASE WPI Week 199803 Thomson
Scientific, London, GB; AN 1998-019058
XP002638570, & CN 1 133 684 A (MA P) 23 October
1996 (1996-10-23)**

EP 2 654 464 B1

**Description**

**Field of the invention**

The present invention concerns a short cooking dry pasta composition, as well as the use of said composition and the process for the manufacture of the composition.

**Background of the invention**

According to the World Health Organisation (WHO), Vitamin A deficiency is a public health problem in more than half of all countries. Although mostly low-income countries in Africa and South-East Asia are affected, it is also desirable to provide sufficient levels of Vitamin A in the diet for consumers in emerging and developed countries. Especially deficiencies among children and adolescents are of concern and have to be addressed ("EsKiMo" Ernährungsstudie als KiGGS Modul; Research Report, G.B.M. Mensink et al.; Robert Koch Institut, 2007). Vitamin A deficiency can lead to serious health disorders, such as impaired vision, particularly in reduced light (night blindness).

A popular and cost effective staple food for this target group is pasta as part of dehydrated soups and meals. Children in particular are attracted by coloured pasta with different shapes. Therefore pasta can be considered as a favourable food vehicle to enhance the supply of vitamins, especially pro-vitamin A, which acts as a precursor to vitamin A.

In order to significantly contribute to an adequate pro-vitamin A supply at least 15% of the Recommended Daily Allowance should be provided by a serving. To meet the expectations of the consumers, it is of particular interest to use only carotenoid sources of natural origin.

Several approaches have been described in the prior art to include β-carotene containing raw materials into pasta or noodles.

One known approach is to incorporate vegetable powder in pasta. However, this approach adds about 50% of general insoluble matter coming from the vegetable structure. Like that it is difficult to incorporate enough powder in order to have a high amount of active substances included in the matrix (max 30 ppm total carotenoids as best case scenario), without compromising on organoleptic properties, especially texture and mouth feel. Additionally, the vegetable powder undergoes a double drying treatment which increases the total carotenoids oxidation losses.

Vegetable and/or fruit juices are commonly added already to pasta or noodles in limited amounts generally for colouring or flavouring purposes. The EP patent 117'955 concerns a pasta food such as macaroni, spaghetti and the like which have colour and aroma of specified natural fruit. The FR patent 2904193 concerns a jellified food product comprising a main ingredient taken in the group consisting of vegetables, fruits, juices of vegetable origin and a cold jellifying agent as well as a hot jellifying agent: in this case the product has a high water content and has to be preserved chilled.

CN101057640, CN1133684 and CN1541555 describe nutritionally enriched noodles by using vegetable juice as ingredients. However, vegetable juices, such as carrot juice, have a total carotenoids content which usually does not exceed 1.5 mg/100g. Therefore the use of carrot juice or carrot pulp as a source of carotenoids is not suited to incorporate physiologically meaningful amounts of e.g. β-carotene into a dried product without compromising on organoleptic quality.

Carotenoids are prone to oxidative degradation during production and shelf life particularly of dehydrated products. This in turn affects drastically the nutritional value. Especially the content of pro-vitamin A (i.e. β-carotene) is diminished and often below a level which can contribute significantly to a balanced diet.

It is therefore an objective of the present invention to provide to the consumer a dry pasta composition containing physiologically meaningful levels of carotenoids of natural origin. It is a further objective to stabilize the high levels of carotenoids over the whole shelf life of the dehydrated product. Furthermore, it is an objective to provide a dry pasta product, which allows quick and convenient preparation. Another objective is to obtain a nutritionally enriched pasta using ingredients of solely natural origin.

The present invention seeks to address the above-described problems. The invention also aims at other objects and particularly the solution of other problems as will appear in the rest of the present description.

**Summary of the invention**

In a first aspect, the invention provides a short cooking dry pasta composition, comprising flour, egg, ascorbic acid, at least 7 % carrot juice concentrate, between 0.5 and 10 % of water, wherein the composition comprises at least 80 ppm of ascorbic acid, preferably between 100 and 140 ppm, and wherein the total carotenoids content consists of at least 100 ppm. In a preferred embodiment of the invention the flour is wheat semolina.

In a second aspect, the invention concerns a method for making short cooking pasta comprising the steps of:

    a. Mixing flour with a mixture comprising at least 7 % carrot juice concentrate, at least 3% of whole egg and at least 80 ppm of ascorbic acid, preferably between 100 and 140 ppm,

b. Extruding the mixture through an extrusion die to having extruded mass,

c. Pre-cooking the extruded mass to give a short cooking pasta and

d. Drying the pasta at a water content comprised between 0.5 and 10 %.

## Detailed description of the invention

According to the invention, it is possible to reach the mentioned objectives of having dry pasta with appealing organoleptic characteristics and simultaneously reaching a high and stabilized level of pro-vitamin A over shelf life in this product.

In the present context the the term "pasta" is to be understood to include "noodles".

The term "flour" in the context of this application relates to a milled cereal product, encompassing all size fractions, such as flour, dunst, grits or semolina.

As outlined above, at least 15% of the Recommended Daily Allowance (RDA) of Vitamin A per serving is considered a significant nutritional contribution to the vitamin A supply of a human. This is the minimum amount the EU regulation requires to make a nutritional claim. EU directive 90/496/EEC states the RDA of Vitamin A as 0.8 mg per day for adults and 7-10 year old children (male/female). The amount of Vitamin A is given as "retinol equivalent", which can be translated via the following equation to "total carotenoids" (TC):

$$\texttt{Retinol equivalent = TC*(0.1+(0.4/12))}$$

A serving of a dehydrated shelf stable food composition such as soups with pasta typically contains an amount of about 15g pasta (dry weight). To account for natural variations of the carotenoid content in raw materials and oxidative losses during production the target value for the total carotenoid content has been set to at least 100 ppm, preferably 120 to 160 ppm in the dry pasta composition.

It is obvious that desired levels of at least 10 mg total carotenoids in 100g of dry pasta composition (100 ppm) cannot be achieved by simply using vegetable juice in the production of the pasta.

It is thus an objective to select an ingredient sufficiently rich in pro-vitamin A ($\beta$-carotene) to achieve the target values without altering the quality of a conventional pasta and imposing a need for broad technological adaptations to the process. It has been found, that carrot juice concentrate (from *Daucus carota L.),* preferably in with at least 40% dry weight is suitable to meet the above requirements. Typically a carrot juice concentrate containing around 1300 ppm of total carotenoids can deliver the desired levels. Other juice concentrates made of new carrot breeds or varieties may also be used.

Dry pasta compositions are usually offered with a shelf life of at least 360 days under ambient conditions. Traditional pasta or noodles enriched with $\beta$-carotene containing vegetable juice undergo severe oxidative degradation during an extended shelf life under above mentioned conditions.

Surprisingly it has been found that the carotenoid content of the naturally enriched pasta can be effectively stabilized by the addition of ascorbic acid in combination with an "encapsulation", which is achieved by a pre-cooking step of the pasta. Preferably, this step is done by steaming of the extruded pasta mass. Wishing not being bound by theory it is assumed, that the partial gelatinisation of the surface seals the content and prevents access of excessive oxygen to sensitive ingredients, such as $\beta$-carotene. As focus has been put on a convenience product and the pre-cooking step is essential to produce quick cooking pasta, the development of an enriched pasta has been directed towards this type of pasta.

The present invention concerns a short cooking dry pasta composition, comprising flour, egg, ascorbic acid, at least 7 % carrot juice concentrate, between 0.5 and 10 % of water, wherein the composition comprises at least 80 ppm of ascorbic acid, preferably between 100 and 140 ppm, and wherein the total carotenoids content consists of at least 100 ppm.

The flour may comprise any kind of cereal flour, including pseudo cereals, such as rice, maize, barley, spelt, sorghum, oats, rye, triticale, buckwheat, but preferably it's wheat flour. Even more preferred is wheat flour with a particle size between 0.25 and 1.0 mm. This size fraction is usually named semolina. A larger particle size positively affects the texture of both, the dough during processing as well as the pasta in the final composition. Durum wheat semolina is the most preferred flour. The reason is, that it is high in protein and gluten content and its strength make durum suitable for an extruded product such as pasta. The water content in the final composition is preferably below 10%, more preferably below 5%.

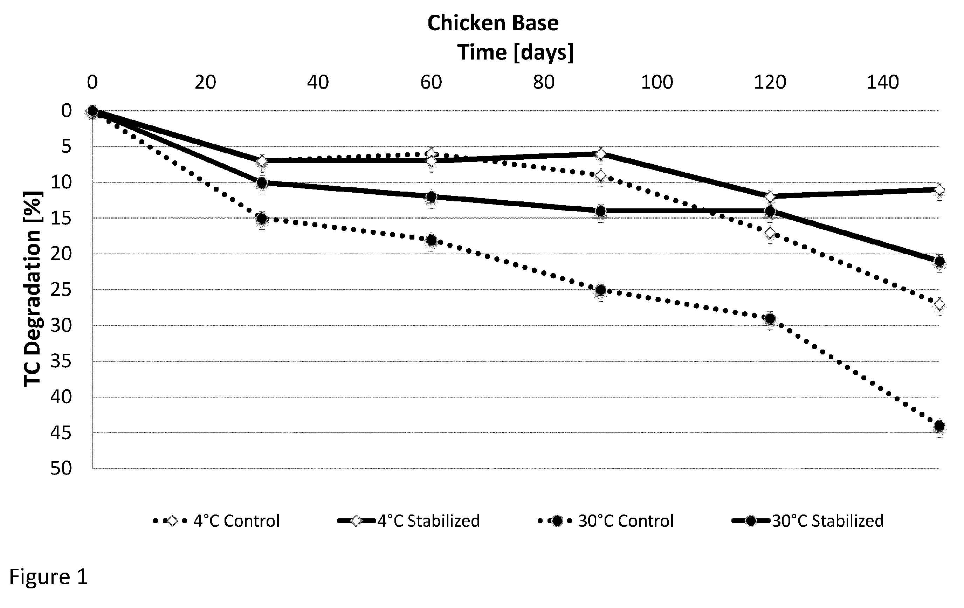

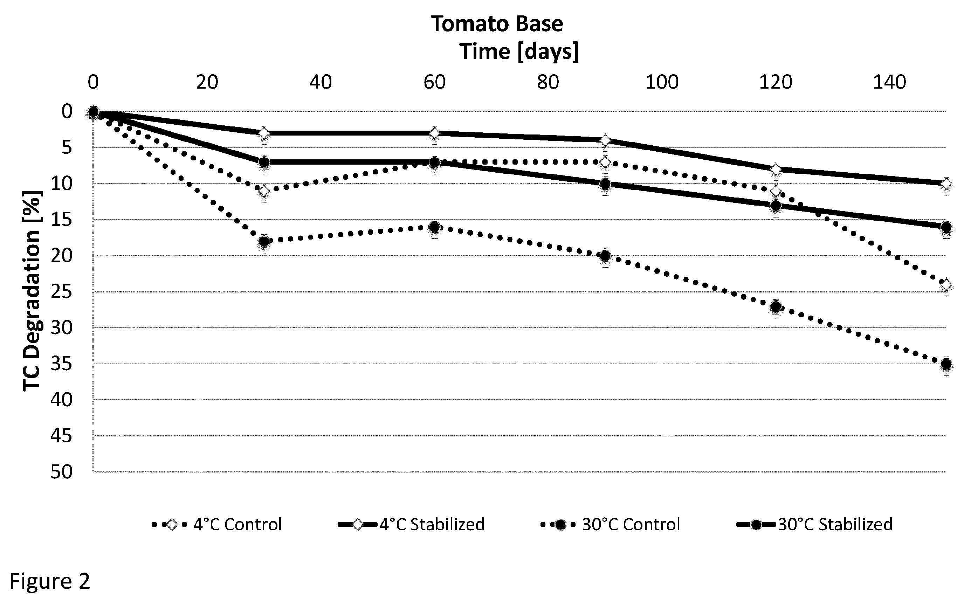

The presence of ascorbic acid in the composition is necessary, because it increases the oxidation stability of the carotenoids in a dry matrix. Intrinsic ascorbic acid contents of ingredients usually do not show the desired stabilization effect, thus an additional source of ascorbic acid is required. The amount of added ascorbic acid is not critical per se, as long as the ascorbic acid content in the final pasta composition exceeds a reasonable level, which has been found to be about 80 ppm. Preferably, the ascorbic acid content in the final composition is comprised between 100 and 140 ppm. In the present specification, all the % are given in weight. Figure 1 and 2 show the difference in total carotenoids degradation over 150 days shelf life between pasta samples with ("stabilized") and without ("control") addition of 100 ppm ascorbic acid from a natural source, in this example Acerola. This clearly demonstrates the effectiveness of the added ascorbic acid stabilisation system compared to pasta with only intrinsic levels of ascorbic acid from carrot juice concentrate. The examples shown in Figure 1 and Figure 2 are shelf stable dehydrated food compositions with a chicken base and tomato base recipe. The relative humidity for the storage tests has been set to 50%.

The ascorbic acid can be of non natural origin, but preferably it has a natural origin. The ascorbic acid comes from an extract from a natural source taken in the group consisting of Kakadu plum, Camu Camu, Rose hip, Acerola, Sea buckthorn, Jujube, Indian gooseberry, Baobab, Hot Chillis, Blackcurrant, Red pepper, Parsley, Guava, Kiwifruit, Broccoli, Loganberry, Redcurrant, Brussels sprout, Wolfberry, Citrus fruits.

In the composition of the invention, the carrot juice concentrate has a dry matter content of at least 40%, preferably of at least 60%. Carrot juice concentrate is typically of honey like consistency (e.g. 70°Brix), but may also be used in a spray-dried form. The final total carotenoid content is preferably comprised between 120 and 160 ppm. The total carotenoids are measured according to the international standard method DIN EN 12823-2 modified. The actives are measured via photometry instead of HPLC as it is described in the DIN method. The pasta is treated via cold alkaline hydrolysis and with methanolic potassium hydroxide (KOH) extraction with hexane. The photometric determination in hexane is done at 450 nm (total carotenoids).

The short cooking dry pasta of the invention can be used per se, but usually it is present in a shelf stable dehydrated composition in an amount comprised between 5 and 95 %. For example, it can be part of a dehydrated soup or a pasta based meal, intended to be prepared in less than 10 mins cooking time. Preferably, the shelf stable dehydrated composition is made solely from natural ingredients.

The present invention further relates to the use of a dry pasta in a food composition for naturally supplementing pro-vitamin A upon consumption of said dry pasta. Furthermore, the invention concerns the use of the dry pasta, wherein the dry pasta is a natural pro-vitamin A carrier in the final food composition.

The present invention concerns further a method for making a short cooking pasta comprising the steps of:

> a. Mixing flour with a mixture comprising at least 7 % carrot juice concentrate, at least 3% of whole egg and at least 80 ppm of ascorbic acid, preferably between 100 and 140 ppm,
> b. Extruding the mixture through an extrusion die to having extruded mass,
> c. Pre-cooking the extruded mass to give a short cooking pasta and
> d. Drying the pasta at a water content comprised between 0.5 and 10 %.

According to the invention, the amount of flour in the dough is of at least 70%. Preferably the flour comprises wheat semolina. More favourably, the wheat semolina is wheat durum semolina.

The carrot juice is a concentrate having at least 40 % dry matter, preferably 60 % dry matter.

The ascorbic acid can come from a non natural origin or a natural origin. Preferably it comes from an extract from a natural source taken in the group consisting of Kakadu plum, Camu Camu, Rose hip, Acerola, Seabuckthorn, Jujube, Indian gooseberry, Baobab, Hot Chillis, Blackcurrant, Red pepper, Parsley, Guava, Kiwifruit, Broccoli, Loganberry, Redcurrant, Brussels sprout, Wolfberry, Citrus fruits.

The amount of ascorbic acid present in the mixture is comprised between 0.01 and 0.1 %. The amount of carrot juice in the mixture is comprised between 7 and 12 %.

The extruding step is normally carried out at room temperature. The die temperature is above 30°C. The applied extrusion pressure ranges between 106 and 124 bar.

The pre-cooking is carried out by boiling or steaming the extruded mass for less than 10 minutes. Preferably, the pre-cooking is carried out in less than 5 minutes.

The final amount of carotenoids in the dry pasta is of at least 100 ppm.

Example

72 kg of wheat durum semolina is mixed with 9 kg of carrot juice concentrate, 4 kg of liquid egg, 15 kg of water and 20 g of ascorbic acid. The carrot juice used has a dry content of 60 %. The obtained mixture is extruded and is steam cooked during 5 minutes. The obtained pasta is finally dried to a water content of 6 %.

The final dry pasta has following composition:

| | |
|---|---|
| Wheat durum semolina | 85 % |
| Carrot juice | 8 % |
| Liquid egg | 1 % |
| Ascorbic acid | 0.01 % |

## Claims

1. Short cooking dry pasta composition, comprising flour, egg, ascorbic acid, at least 7 % carrot juice concentrate, between 0.5 and 10 % of water, wherein the composition comprises at least 80 ppm of ascorbic acid, preferably between 100 and 140 ppm, and wherein the total carotenoids content consists of at least 100 ppm.

2. Short cooking dry pasta composition according to claim 1, wherein the flour comprises wheat semolina.

3. Short cooking dry pasta composition according to claim 2, wherein the wheat semolina comprises semolina, having a particle size between 0.25 and 1.00 mm in diameter.

4. Pasta composition according to claim 1 to 3, wherein the amount of total carotenoids is comprised between 120 and 160 ppm.

5. Pasta composition according to claim 1 to 4, wherein the ascorbic acid come from an extract from a natural source taken in the group consisting of Kakadu plum, Camu Camu, Rose hip, Acerola, Sea buckthorn, Jujube, Indian gooseberry, Baobab, Hot Chillis, Blackcurrant, Red pepper, Parsley, Guava, Kiwifruit, Broccoli, Loganberry, Redcurrant, Brussels sprout, Wolfberry, Citrus fruits.

6. Shelf stable dehydrated food composition comprising short cooking dry pasta according to any of the preceding claims in an amount comprised between 5 and 95 %.

7. Shelf stable dehydrated food composition according to claim 6, which is selected from soup or pasta-based meal.

8. Use of a pasta composition according to any of claims 1 to 5 in a food composition for naturally supplementing pro-vitamin A upon consumption of said food composition.

9. Use of pasta composition according to claim 8, wherein the pasta composition is a natural pro-vitamin A carrier in the food composition.

10. Method for making a short cooking dry pasta according to claim 1 to 5 comprising the steps of:

    a. Mixing flour with a mixture comprising at least 7 % carrot juice concentrate, at least 3% of whole egg and ascorbic acid,
    b. Extruding the mixture through an extrusion die to having extruded mass,
    c. Pre-cooking the extruded mass to give a short cooking pasta and
    d. Drying the pasta at a water content comprised between 0.5 and 10 %.

11. Method according to claim 10, wherein the short cooking pasta comprises at least 70% wheat durum semolina.

12. Method according to claim 10 to 11, wherein the extruding step is carried out at room temperature.

13. Method according to any of claims 10 to 11, wherein the pre-cooking is carried out by boiling or steaming the extruded mass for less than 10 minutes.

14. Method according to any of claims 10 to 13, wherein the amount of carrot juice concentrate is comprised between 7 and 12 % and the amount of ascorbic acid present in the mixture is comprised between 0.01 and 0.1 %.

**Patentansprüche**

1. Trockennudelzusammensetzung mit kurzer Kochzeit, umfassend Mehl, Ei, Ascorbinsäure, mindestens 7 % Karottensaftkonzentrat, zwischen 0,5 und 10 % Wasser, wobei die Zusammensetzung mindestens 80 ppm Ascorbinsäure umfasst, bevorzugt zwischen 100 und 140 ppm, und wobei der Gesamtcarotinoidgehalt aus mindestens 100 ppm besteht.

2. Trockennudelzusammensetzung mit kurzer Kochzeit nach Anspruch 1, wobei das Mehl Weizengrieß umfasst.

3. Trockennudelzusammensetzung nach Anspruch 2, wobei der Weizengrieß Grieß umfasst, der eine Teilchengröße zwischen 0,25 und 1,00 mm Durchmesser aufweist.

4. Nudelzusammensetzung nach Anspruch 1 bis 3, wobei die Menge an Gesamtcarotinoid zwischen 120 und 160 ppm beträgt.

5. Nudelzusammensetzung nach Anspruch 1 bis 4, wobei die Ascorbinsäure aus einem Extrakt aus einer natürlichen Quelle entnommen aus der Gruppe bestehend aus Buschpflaume, Camu-Camu, Hagebutte, Acerola, Sanddorn, Jujube, Indische Stachelbeere, Affenbrotbaum, scharfen Chillis, schwarze Johannisbeere, Cayennepfeffer, Petersilie, Guave, Kiwifrucht, Brokkoli, Loganbeere, rote Johannisbeere, Rosenkohl, Wolfsbeere, Zitrusfrüchten stammt.

6. Lagerfähige entwässerte Nahrungszusammensetzung, die Trockennudeln mit einer kurzen Kochzeit nach einem der vorhergehenden Ansprüche in einer Menge umfassend zwischen 5 und 95 % umfasst.

7. Lagerfähige entwässerte Nahrungszusammensetzung nach Anspruch 6, die ausgewählt ist aus Suppe oder einem auf Nudel basierenden Gericht.

8. Verwendung einer Nudelzusammensetzung nach einem der Ansprüche 1 bis 5 bei einer Nahrungszusammensetzung für die natürliche Supplementierung von Pro-Vitamin A bei dem Verzehr der Nahrungszusammensetzung.

9. Verwendung einer Nudelzusammensetzung nach Anspruch 8, wobei die Nudelzusammensetzung ein natürlicher Pro-Vitamin A-Träger in der Nahrungszusammensetzung ist.

10. Verfahren zur Herstellung von Trockennudeln mit kurzer Kochzeit nach Anspruch 1 bis 5, umfassend die folgenden Schritte:

    a. Mischen von Mehl mit einer Mischung, die mindestens 7 % Karottensaftkonzentrat, mindestens 3 % Vollei und Ascorbinsäure umfasst,
    b. Extrudieren der Mischung durch eine Extrusionsdüse zur Erzeugung einer extrudierten Masse,
    c. Vorkochen der extrudierten Masse zum Erhalt von Nudeln mit einer kurzen Kochzeit, und
    d. Trocknen der Nudeln auf einen Wassergehalt, der zwischen 0,5 und 10 % umfasst ist.

11. Verfahren nach Anspruch 10, wobei die Nudeln mit kurzer Kochzeit mindestens 70 % Hartweizengrieß umfassen.

12. Verfahren nach Anspruch 10 bis 11, wobei der Extrusionsschritt bei Raumtemperatur durchgeführt wird.

13. Verfahren nach einem der Ansprüche 10 bis 11, wobei das Vorkochen durch Kochen oder Dämpfen der extrudierten Masse für weniger als 10 Minuten durchgeführt wird.

14. Verfahren nach einem der Ansprüche 10 bis 13, wobei die Menge an Karottensaftkonzentrat zwischen 7 bis 12 % beträgt und die Menge an Ascorbinsäure, die in der Mischung vorhanden ist, zwischen 0,01 und 0,1 % umfasst ist.


**Revendications**

1. Composition de pâte sèche pour cuisson rapide, comprenant de la farine, de l'oeuf, de l'acide ascorbique, au moins 7 % de concentré de jus de carotte, entre 0,5 et 10 % d'eau, dans laquelle la composition comprend au moins 80 ppm d'acide ascorbique, de préférence entre 100 et 140 ppm et dans laquelle la teneur totale en caroténoïdes consiste en au moins 100 ppm.

**2.** Composition de pâte sèche pour cuisson rapide selon la revendication 1, dans laquelle la farine comprend de la semoule de blé.

**3.** Composition de pâte sèche pour cuisson rapide selon la revendication 2, dans laquelle la semoule de blé comprend de la semoule ayant une taille de particule allant de 0,25 à 1,00 mm de diamètre.

**4.** Composition de pâte selon la revendication 1 à 3, dans laquelle la teneur totale en caroténoïdes va de 120 à 160 ppm.

**5.** Composition de pâte selon la revendication 1 à 4, dans laquelle l'acide ascorbique provient d'un extrait d'une source naturelle prise dans le groupe constitué de prune de Kakadu, camu camu, cynorrhodon, acérola, argousier, jujube, groseille indienne, baobab, piments forts, cassis, poivron rouge, persil, goyave, kiwi, brocolis, mûre de Logan, groseille, chou de Bruxelles, goji, agrumes.

**6.** Composition alimentaire déshydratée longue conservation comprenant une pâte sèche pour cuisson rapide selon l'une quelconque des revendications précédentes, en une quantité allant de 5 à 95 %.

**7.** Composition alimentaire déshydratée longue conservation selon la revendication 6, qui est choisie parmi la soupe ou un repas à base de pâte.

**8.** Utilisation d'une composition de pâte selon l'une quelconque des revendications 1 à 5 dans une composition alimentaire pour compléter naturellement en pro-vitamine A lors de la consommation de ladite composition alimentaire.

**9.** Utilisation de la composition de pâte selon la revendication 8, dans laquelle la composition de pâte est un porteur naturel de pro-vitamine A dans la composition alimentaire.

**10.** Procédé de préparation d'une pâte sèche pour cuisson rapide selon la revendication 1 à 5, comprenant les étapes consistant à :

a. mélanger de la farine avec un mélange comprenant au moins 7 % de concentré de jus de carotte, au moins 3 % d'oeuf entier et de l'acide ascorbique,
b. extruder le mélange à travers une filière d'extrusion pour obtenir une masse extrudée,
c. pré-cuire la masse extrudée pour obtenir une pâte pour cuisson rapide et
d. faire sécher la pâte jusqu'à une teneur en eau allant de 0,5 à 10 %.

**11.** Procédé selon la revendication 10, dans lequel la pâte pour cuisson rapide comprend au moins 70 % de semoule de blé dur.

**12.** Procédé selon la revendication 10 à 11, dans lequel l'étape d'extrusion est effectuée à température ambiante.

**13.** Procédé selon l'une quelconque des revendications 10 à 11, dans lequel la pré-cuisson est effectuée en faisant bouillir ou en cuisant à la vapeur la masse extrudée pendant moins de 10 minutes.

**14.** Procédé selon l'une quelconque des revendications 10 à 13, dans lequel la quantité de concentré de jus de carotte va de 7 à 12 % et la quantité d'acide ascorbique présente dans le mélange va de 0,01 à 0,1 %.

**Chicken Base**

Figure 1

EP 2 654 464 B1

**Tomato Base**
**Time [days]**

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 117955 A
- FR 2904193
- CN 101057640
- CN 1133684
- CN 1541555

**Non-patent literature cited in the description**

- **G.B.M. MENSINK et al.** Research Report. Robert Koch Institut, 2007